(19) Europäisches Patentamt
European Patent Office
Office européen des brevets

(11) Veröffentlichungsnummer: **0 046 515**
**B1**

(12) # EUROPÄISCHE PATENTSCHRIFT

(45) Veröffentlichungstag der Patentschrift: **27.11.85**

(51) Int. Cl.⁴: **H 02 M 3/335**

(21) Anmeldenummer: **81105925.2**

(22) Anmeldetag: **27.07.81**

(54) **Sperrschwinger-Schaltnetzteil.**

(30) Priorität: **25.08.80 DE 3032034**

(43) Veröffentlichungstag der Anmeldung: **03.03.82 Patentblatt 82/9**

(45) Bekanntmachung des Hinweises auf die Patenterteilung: **27.11.85 Patentblatt 85/48**

(84) Benannte Vertragsstaaten: **DE FR GB IT**

(56) Entgegenhaltungen:
**DE - A - 2 849 619**
**DE - A - 2 934 159**
**DE - B - 2 417 628**

**FUNKSCHAU, Nr. 5, 1975 R. DANGSCHAT et al. "*Ein Sperrwandler-Netzmodul mit Netztrennung*" Seiten 40 bis 43**
**VALVO, Technische Information für die Industrie, Nr. 770415, April 1977 "*Steuer- und Regelschaltung TDA 1060 für Schaltnetzteile*" (15 Seiten)**

(73) Patentinhaber: ***Siemens Aktiengesellschaft*, *Berlin und München* Wittelsbacherplatz 2, D-8000 München 2 (DE)**

(72) Erfinder: **Peruth, Günther, Franz-Wolter-Strasse 13, D-8000 München 81 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung bezieht sich auf einen Sperrschwinger-Schaltnetzteil zur Versorgung eines elektrischen Geräts, bei dem die Primärwicklung eines Transformators in Serie mit der Emitter-Kollektorstrecke eines ersten Bipolartransistors an die durch Gleichrichtung der über zwei externe Versorgungsanschlüsse zugeführten Netzwechselspannung erhaltene Gleichspannung gelegt und eine Sekundärwicklung des Transformators zur Stromversorgung des elektrischen Gerätes vorgesehen ist, bei dem ausserdem die Basis des ersten Bipolartransistors durch den Ausgang einer Regelschaltung gesteuert ist, die ihrerseits durch einen, von der gleichgerichteten Netzwechselspannung abgeleiteten Istwert und durch einen Sollwertgeber beaufschlagt ist und bei dem schliesslich eine Anlaufschaltung zur weiteren Steuerung der Basis des ersten Bipolartransistors vorgesehen ist.

Ein solcher Sperrschwinger-Schaltnetzteil ist in «Funkschau» (1975) H. 5, S. 40-44 beschrieben. Bekanntlich liegt die Aufgabe einer solchen Schaltung darin, ein elektronisches Gerät, z.B. einen Fernsehempfänger, mit stabilisierten und geregelten Betriebsspannungen zu versorgen. Wesentlich für einen solchen Schaltnetzteil ist ein Leistungsschalttransistor, also eines Bipolartransistors mit hoher Schaltgeschwindigkeit und hoher Sperrspannung. Dieser Transistor bildet somit einen wesentlichen Bestandteil des Stellglieds der Regelschaltung. Weiter ist eine hohe Arbeitsfrequenz und ein auf hohe Betriebsfrequenz ausgerichteter Transformator vorgesehen, da im allgemeinen eine weitgehende Absonderung des zu versorgenden Gerätes vom Versorgungsnetz erwünscht ist.

Solche Schaltnetzteile können entweder nach dem synchronisierten oder fremdgesteuerten Betrieb oder nach dem nichtsynchronisierten oder selbstschwingenden Betrieb ausgelegt sein. Unter einem Sperrwandler versteht man einen Schaltnetzteil, in welchem Leistung an das zu versorgende Gerät nur dann abgegeben wird, wenn der die Verbindung zwischen der Primärspule des Transformators und der gleichgerichteten Wechselspannung bildende Schalttransistor gesperrt ist. Die an die Primärspule des Transformators bei geöffnetem Schalttransistor vom Netz-Gleichrichter abgegebene Leistung wird in dem Transformator zwischengespeichert und dann bei gesperrtem Schalttransistor auf der Sekundärseite des Transformators an den Verbraucher abgegeben.

Nun ist bei dem in der Literaturstelle «Funkschau» (1975) H. 5, S. 40-44 beschriebenen Sperrwandler der Leistungsschalttransistor in der eingangs definierten Weise geschaltet. Ausserdem ist eine sog. Anlaufschaltung vorgesehen. Da in der Gesamtschaltung eines Sperrschwingers entsprechend der eingangs gegebenen Definition in der Regel einige Dioden vorgesehen sind, ist es zwecks Vermeidung einer Schädigung dieser Dioden notwendig, dass durch den Kollektor-Spitzenstrom im Kurzschlussfall keine zu starke Belastung dieser Dioden und ggf. vorhandener weiterer empfindlicher Schaltungsteile eintreten kann.

In Anbetracht der Wirkungsweise eines Sperrschwingers bedeutet dies, dass im Kurzschlussfall die Anzahl der Kollektorstromimpulse pro Zeiteinheit reduziert werden muss. Hierzu ist eine Ansteuer- und Regelschaltung vorgesehen. Gleichzeitig muss eine Anlaufschaltung den Sperrwandler beim Einschalten des Gerätes und nach Störfällen, z.B. bei Kurzschluss, wieder in den normalen Betrieb bringen. Das in der genannten Literaturstelle «Funkschau» auf S. 42 angegebene Beispiel einer Anlaufschaltung weicht bereits etwas von den üblichen Gleichstrom-Anlaufschaltungen ab. Gemeinsam ist jedoch allen bekannten Sperrschwingerschaltungen, dass ein Thyristor oder eine den Thyristor ersetzende Ersatzschaltung wesentlich für die Wirkung des Regelkreises ist.

Es ist nun Aufgabe der Erfindung, eine andere Möglichkeit für eine Anlaufschaltung anzugeben. Aufgabe der weiteren Erfindung ist es, eine hierzu besonders geeignete Schaltungsmöglichkeit für die Regelschaltung anzugeben. Dabei soll der Betrieb des erfindungsgemässen Schaltnetzteiles über den gesamten Netzspannungsbereich von 90 bis 270 V Wechselspannung bei weitgehend konstanten Sekundärspannungen und sekundären Lastschwankungen zwischen Leerlauf und Kurzschluss gewährleistet sein.

Erfindungsgemäss ist deshalb der eingangs definierte Sperrschwinger-Schaltnetzteil derart ausgestaltet, dass eine in der Anlaufschaltung vorgesehene Diode mit ihrer Anode unmittelbar an den einen der beiden durch die Netzwechselspannung zu beaufschlagenden Versorgungsanschlüsse gelegt ist, während ihre Kathode über einen Widerstand an einen der Stromversorgung der Regelschaltung dienenden Eingang derselben geschaltet ist, dass ausserdem derselbe Eingang der Regelschaltung unmittelbar mit der Kathode einer zweiten Diode und die Anode dieser zweiten Diode mit dem einen Anschluss einer weiteren Sekundärwicklung des Transformators verbunden ist, während der andere Anschluss dieser Sekundärwicklung am Emitter des ersten Bipolartransistors liegt.

Eine entsprechend aufgebaute Schaltung für einen Sperrschwinger-Schaltnetzteil ist in Fig. 1 dargestellt, während die Schaltung gemäss Fig. 2 eine bevorzugte Weiterbildung dieses Schaltnetzteils ist. Eine besonders günstige Ausbildung für die Regelschaltung ist in Fig. 3 im Blockschaltbild gezeigt.

Bei der in Fig. 1 dargestellten Schaltung gemäss der Erfindung wird von dem durch die beiden Versorgungsanschlüsse 1′ und 2′ gebildeten Netzeingang eine als Grätzschaltung ausgebildete Gleichrichterschaltung G beaufschlagt. Die Gleichrichterausgänge 3′ und 4′ werden durch die Reihenschaltung der Emitter-Kollektorstrecke eines NPN-Leistungstransistors $T_1$, also des ersten Bipolartransistors gemäss der oben gegebenen Definition, mit der Primärwicklung I des Transformators Tr überbrückt. Die Kapazität $C_1$ wirkt neben der Induktivität des Transformators Tr frequenzbestimmend und begrenzt die Abreissspannungen des durch den ersten Transistor $T_1$ gegebenen Schalters. Die zwischen der Basis des ersten Transistors $T_1$ und dem Stellausgang der Regelschaltung RS vorgesehene Kapazität $C_2$ trennt die Gleichspannungspotentiale der Regelschaltung RS und des Schalttransistors $T_1$ und dient zur Impulsansteuerung dieses Schalttransistors $T_1$. Der am Stellausgang 7, 8 der Regelschaltung RS vorgesehene Widerstand $R_1$ ist der Gegenkoppelwiderstand der beiden Endstufen der Regelschaltung RS. Mit ihm wird der maximal mögliche Ausgangs-Impulsstrom der Regelschaltung RS festgelegt. Die Sekundärwicklung II des Transformators Tr übernimmt im eingeschwungenen Betrieb über die Diode $D_1$ die Stromversorgung der Regelschaltung. Hierzu ist die Kathode dieser Diode $D_1$ mit dem Stromversorgungseingang 9 der Regelschaltung RS unmittelbar verbunden, während ihre Anode am einen Anschluss der genannten Sekundärwicklung II liegt. Der andere Anschluss dieser Sekundärwicklung II ist unmittelbar mit dem Emitter des Leistungsschalttransistors $T_1$ verbunden.

Die Kathode der Diode $D_1$ und damit der genannte Versorgungsanschluss 9 der Regelschaltung RS liegen ausserdem am einen Pol eines Kondensators $C_3$, dessen anderer Pol mit dem einen Ausgang 3′ des Gleichrichters G verbunden ist. Damit glättet die Kapazität dieses Kondensators $C_3$ die positiven Halbwellenimpulse und dient gleichzeitig als Energiespeicher während der Anlaufzeit. Eine dritte Sekundärwicklung III des Transformators Tr ist mit ihrem einen Anschluss ebenfalls an den Emitter des ersten Transistors $T_1$ und mit ihrem anderen Anschluss über den Widerstand $R_2$ an den einen Pol eines weiteren Kondensators $C_4$ gelegt, dessen zweiter Pol mit dem erstgenannten Anschluss der dritten Sekundärwicklung III verbunden ist. Gleichzeitig liegt dieser zweite Pol des Kondensators $C_4$ an dem bereits erwähnten Ausgang 3′ der Gleichrichterschaltung G und damit über den ebenfalls bereits gennanten Kondensator $C_3$ sowohl an der Kathode der von der zweiten Sekundärwicklung II des Transformators Tr her beaufschlagten Diode $D_1$ als auch an dem Stromversorgungseingang 9 der Regelschaltung RS als auch über dem Widerstand $R_9$ an der Kathode der zweiten Diode $D_4$. Ausserdem ist der besagte zweite Pol des Kondensators $C_4$ unmittelbar an den Anschluss 6 der Regelschaltung RS und über einen weiteren Kondensator $C_6$ an den Anschluss 4 der Regelschaltung RS als auch zusätzlich über den Widerstand $R_6$ an den anderen Ausgang 4′ der Gleichrichterschaltung G gelegt. Schliesslich liegt der besagte zweite Pol des von der zweiten Sekundärwicklung II her beaufschlagten Kondensators $C_4$ über einen weiteren Kondensator $C_5$ an einem Knoten, der einerseits über den einstellbaren Widerstand $R_4$ an die Anschlüsse 1 und 3 der Regelschaltung RS gelegt ist, wobei im Falle des Anschlusses 1 noch ein Festwiderstand $R_5$ zwischengeschaltet ist. Andererseits ist der besagte Knoten und damit der Kondensator $C_5$ mit der Anode einer dritten Diode $D_2$ verbunden, deren Kathode einerseits an dem zu der dritten Sekundärwicklung III des Transformators Tr führenden und bereits erwähnten Widerstand $R_2$ liegt und andererseits über einen Widerstand $R_3$ mit dem Anschluss 2 der Regelschaltung RS verbunden ist.

Die neun Anschlüsse der Regelschaltung RS haben folgende Funktionen:

Anschluss 1 liefert die intern erzeugte Referenzspannung gegen Masse, also den für den Regelvorgang erforderlichen Sollwert;

Anschluss 2 dient als Eingang für die von der dritten Sekundärwicklung III gelieferten Schwingungen, in deren Nullpunkt der Impulsstart des Ansteuerimpulses erfolgt;

Anschluss 3 ist der Regeleingang, an welchem der Regelschaltung RS der vorhandene Istwert mitgeteilt wird, der durch die gleichgerichteten Schwingungen an der dritten Sekundärwicklung III entsteht;

Anschluss 4 spricht bei Maximalhub, d.h. beim grössten über den ersten Transistor $T_1$ fliessenden Strom an;

Anschluss 5 ist ein Schutzeingang, der dann anspricht, wenn die gleichgerichtete Netzspannung zu stark abfällt;

Anschluss 6 dient der Stromversorgung des Regelvorgangs und zwar als Masse-Anschluss;

Anschluss 7 liefert die für die Aufladung des zur Basis des ersten Transistors $T_1$ führenden Kopplungskondensator $C_2$ erforderliche Gleichstromkomponente;

Anschluss 8 liefert den für die Basis des ersten Transistors $T_1$ erforderlichen Regelimpuls;

Anschluss 9 dient als erster Anschluss der Stromversorgung der Regelschaltung RS.

Auf weitere Einzelheiten der Regelschaltung RS wird noch eingegangen.

Die Kapazität $C_3$ glättet die positiven Halbwellenimpulse, die von der Sekundärwicklung II geliefert werden und dient gleichzeitig als Energiespeicher während der Anlaufzeit. Die Sekundärwicklung III erzeugt die Regelschaltung und wird gleichzeitig als Rückkopplung verwendet. Das Zeitglied $R_2/C_4$ hält Oberschwinger und schnelle Störspitzen von der Regelschaltung RS fern. Der Widerstand $R_3$ ist als Spannungsteiler für den zweiten Anschluss der Regelschaltung RS vorgesehen. Die Diode $D_2$ richtet die von der Sekundärwicklung III abgegebenen Regelimpulse gleich. Die Kapazität $C_5$ glättet die Regelschaltung. Am Anschluss 1 der Regelschaltung RS liegt die Referenzspannung $U_{ref}$, die auf Masse, also das Potential des Anschlusses 6 bezogen ist. Die Widerstände $R_4$ und $R_5$ bilden einen Spannungsteiler des Eingangsdifferenz-Regelverstärkers am Anschluss 3. Über den einstellbaren Widerstand $R_4$ lässt sich per Hand die gewünschte Sekundärspannung einstellen. Das Zeitglied $R_6/C_6$ bildet einen Sägezahn-Anstieg, der dem Kollektorstrom-Anstieg des ersten Bipolartransistors $T_1$ über die Primärwicklung I des Transformators Tr entspricht. Der am Anschluss 4 der Regelschaltung RS anliegende Sägezahn wird dort zwischen den Referenzspannungen 2 V und 4 V begrenzt. Der Spannungsteiler $R_7/R_8$ bring am Anschluss 5 der Regelschaltung RS die Freigabespannung für den Ansteuerimpuls am Ausgang 8 der Regelschaltung RS.

Die Diode $D_4$ bildet zusammen mit dem Widerstand $R_9$ im Zusammenwirken mit der Diode $D_1$ und der Sekundärwicklung II die gemäss der Erfindung vorgesehene Anlaufschaltung. Ihre Wirkung ist folgendermassen:

Nach dem Einschalten des Schaltnetzteiles bauen sich am Kollektor des Schalttransistors $T_1$ und am Eingang 4 der Regelschaltung RS Gleichspannungen in zeitlicher Abhängigkeit von den vorgegebenen Zeitkonstanten auf. Die positiven Sinushalbwellen laden die Kapazität $C_3$ über die Anlauf-Diode $D_4$ und den Anlauf-Widerstand $R_9$ in Abhängigkeit von der Zeitkonstanten $R_9.C_3$ auf. Dabei wird über den (noch nicht genannten und die Verbindung zwischem dem Widerstand $R_9$ bzw. der Diode $D_1$ mit dem Anschluss 5 der Regelschaltung RS bildenden) Widerstand $R_{11}$ und den Schutzeingang 5 die Regelschaltung RS einschaltbereit vorgespannt und über den Ausgang 7 die Kapazität $C_2$ geladen. Mit dem Erreichen eines vorgegebenen Spannungswertes an dem Kondensator $C_3$ bzw. am Stromversorgungseingang 9 der Regelschaltung RS wird abrupt die Referenzspannung, also der Sollwert für den Betrieb der Regelschaltung RS gebildet, die alle Stufen der Regelschaltung versorgt und am Ausgang 1 derselben erscheint. Gleichzeitig wird über den Ausgang 8 der Schalttransistor $T_1$ durchgesteuert. Das Schalten des Transistors $T_1$ an der Wicklung I des Transformators Tr wird auf die zweite Sekundärwicklung II transformiert, wodurch über die Diode $D_1$ die Kapazität $C_3$ wieder aufgeladen wird. Ist in dem Kondensator $C_3$ genügend Energie gespeichert und reicht die Nachladung über die Diode $D_1$ aus, damit die Spannung am Versorgungseingang 9 nicht unter die vorgegebene Mindestbetriebsspannung abfällt, dann bleibt der Schaltnetzteil eingeschaltet, so dass der Anlaufvorgang beendet ist. Andernfalls wiederholt sich der beschriebene Anlaufvorgang.

Eine Weiterentwicklung der in Fig. 1 dargestellten Schaltung für einen Sperrschwinger-Schaltnetzteil gemäss der Erfindung ist in Fig. 2 dargestellt. Wesentlich für diese Schaltung ist das Vorhandensein eines zweiten Bipolartransistors $T_2$ vom Typ des ersten Bipolartransistors $T_1$ (also im Beispielsfalle eines NPN-Transistors), der einen weiteren Bestandteil der Anlaufschaltung bildet und mit seiner Kollektor-Emitterstrecke zwischen den Widerstand $R_9$ der Anlaufschaltung und den Stromversorgungseingang 9 der Regelschaltung RS gelegt ist. Die Basis dieses zweiten Transistors $T_2$ liegt an einem Knoten, der einerseits über einen Widerstand $R_{10}$ an die eine Elektrode eines Kondensators $C_7$ führt, dessen andere Elektrode mit der Anode der Diode $D_4$ der Anlaufschaltung und damit mit dem Anschluss 1 des Versorgungseingangs des Schaltnetzteils verbunden ist. Anderseits liegt der besagte Knoten und damit die Basis des zweiten Transistors $T_2$ an der Kathode einer Zenerdiode $D_3$, deren Anode an den Ausgang 3 des Gleichrichters G und damit an den einen Pol des Kondensators $C_3$ geschaltet ist, dessen zweiter Pol sowohl mit dem Stromversorgungseingang 9 der Regelschaltung RS als auch mit der Kathode der Diode $D_1$ als auch mit dem Emitter des zweiten Transistors $T_2$ verbunden ist.

Im übrigen entspricht die Schaltung gemäss Fig. 2, abgesehen von dem hier nicht erforderlichen Widerstand $R_{11}$ und der fehlenden Verbindung zwischen dem Widerstand $R_9$ bzw. der Kathode der Diode $D_1$ mit dem Schutzeingang 5 der Regelschaltung RS, der Schaltung gemäss Fig. 1.

Über die Wirkung der Anlaufschaltung gemäss Fig. 2 ist festzustellen, dass die positive Sinushalbwelle der Netzspannung – verzögert durch das Zeitglied $C_7$, $R_{10}$ – die Basis des Transistors $T_2$ in der Anlaufschaltung ansteuert. Die Amplitude wird dabei durch die als Überspannungsschutz der Regelschaltung RS vorgesehene Diode $D_3$, die bevorzugt als Zenerdiode ausgestaltet ist, begrenzt. Der zweite Transistor $T_2$ wird durchgeschaltet. Die Kapazität $C_3$ wird über die Reihenschaltung der Diode $D_4$ und des Widerstands $R_9$ und die Kollektor-Emitterstrecke des Transistors $T_2$ geladen, sobald die Spannung zwischen dem Anschluss 9 und dem Anschluss 6 der Regelschaltung RS, also die Spannung $U_9$ der Bedingung $U_9 < [U_{D_3} - U_{BE}(T_2)]$ genügt.

Aufgrund der Zeitkonstanten $R_9.C_3$ sind mehrere positive Halbwellen notwendig, um die Spannung $U_9$ am Versorgungsanschluss 9 der Regelschaltung RS soweit zu steigern, dass die Regelschaltung RS eingeschaltet wird. Während der negativen Sinushalbwelle erfolgt eine teilweise Energie-Rückladung vom Kondensator $C_3$ über die Emitter-Basisstrecke des Transistors $T_2$ der Anlaufschaltung bzw. über den Widerstand $R_{10}$ und den Kondensator $C_7$ ins Versorgungsnetz. Bei ca. $^2/_3$ der durch die Diode $D_3$ begrenzten Spannung $U_9$ schaltet die Regelschaltung RS ein. Am Anschluss 1 derselben erscheint dann die Referenzspannung $U_{ref}$. Ausserdem wird der Spannungsteiler $R_5/R_4$ wirksam. Am Anschluss 3 erhält der Regelverstärker die den Istwert bildende Spannung, während über den Anschluss 8 der erste Bipolartransistor $T_1$ des Sperrschwinger-Schaltnetzteiles impulsmässig angesteuert wird.

Aufgrund der Aufladung des Kondensators $C_6$ über den Widerstand $R_6$ liegt bei Aktivierung der Regelschaltung RS am Anschluss 4 eine grössere Spannung als $U_{ref}$ an. Die Regelschaltung entladet dann den Kondensator $C_6$ über den Anschluss 4 auf den halben Wert der Referenzspannung $U_{ref}$ und sperrt sofort den Ansteuerausgang 8 der Regelschaltung RS. Der erste Ansteuerimpuls des Schalttransistors $T_1$ ist damit auf ein zeitliches Minimum begrenzt. Die Energie für das Einschalten der Regelschaltung RS und für die Ansteuerung des Transistors $T_1$ wird von der Kapazität $C_3$ geliefert. Die Spannung $U_9$ an der Kapazität $C_3$ sinkt nunmehr ab. Fällt dabei die Spannung $U_9$ unter den Ausschalt-Spannungswert der Regelschaltung RS, dann wird diese inaktiviert. Die nächste positive Sinushalbwelle würde den Anlaufvorgang erneut einleiten.

Durch das Schalten des Transistors $T_1$ wird in der Sekundärwicklung II des Transformators Tr eine Spannung transformiert. Der positive Anteil wird von der Diode $D_1$ gleichgerichtet, wodurch eine Nachladung des Kondensators $C_3$ gegeben ist. Deshalb sinkt die Spannung $U_9$ am Ausgang 9 nicht unter den für den Betrieb der Regelschaltung RS erforderlichen Mindestwert ab, so dass die Regelschaltung RS aktiv bleibt. Der Netzteil arbeitet im Rhythmus der anliegenden Verhältnisse weiter. Im Betrieb hat die Spannung $U_9$ am Versorgungsanschluss 9 der Regelschaltung RS einen Wert, der der Bedingung $U_9 > [U_{D_3} - U_{BE}(T_2)]$ genügt, so dass der Transistor $T_2$ der Anlaufschaltung gesperrt bleibt.

Für den inneren Aufbau der Regelschaltung RS empfiehlt sich vor allem der aus Fig. 3 ersichtliche Aufbau. Dieser ist z.B. bei der im Handel erhältlichen Type TDA 4600 (Siemens AG) realisiert.

Das Blockschaltbild der Regelschaltung gemäss Fig. 3 zeigt deren Stromversorgung über den Anschluss 9, wobei die Endstufe direkt, hingegen alle anderen Stufen über $U_{ref}$ versorgt werden. In der Anlassschaltung werden nacheinander die einzelnen Baugruppen mit Strom versorgt. Das Ausgangs-Gleichspannungspotential der Basisstromverstärkung, also die Spannung für den Anschluss 8 von RS, und die Aufladung des Kondensators $C_2$ über den Anschluss 7 werden noch vor dem Auftreten der Referenzspannung $U_{ref}$ gebildet. Schwankungen der Versorgungsspannung $U_9$ am Anschluss 9 und Leistungsschwankungen am Anschluss 8/Anschluss 7 und am Anschluss 1 der Regelschaltung RS werden durch die Spannungsregelung ausgeglichen. Der Temperaturgang der Regelschaltung RS, vor allem die ungleiche Erwärmung der End- und Vorstufen auf dem die Regelschaltung in monolithisch integrierter Form aufnehmenden Halbleiterchip, werden durch die vorgesehene Temperaturkompensation aufgefangen. Die Ausgangswerte sind in einem bestimmten Temperaturbereich konstant. Die Mitteilung zum Blockieren der Endstufe bei einer zu niedrigen Versorgungsspannung am Anschluss 9 wird auch von dieser Baugruppe an eine vorgesehene Steuerlogik gegeben.

Der äussere Spannungsteiler von Anschluss 1 über die Widerstände $R_5$ und $R_4$ zum Regelabgriff $U_{Regel}$ bildet über den Anschluss 3 für den als Differenzverstärker ausgebildeten Regelverstärker die bewegliche Brückenseite. Die konstante Brückenseite wird von der Referenzspannung $U_{ref}$ über einen internen Spannungsteiler gebildet. Ähnlich sind auch die der Überlast-Kurzschluss-Erkennung und die der «standby»-Leerlauf-Erkennung dienenden Schaltungsteile aufgebaut, die gleichfalls über den Anschluss 3 bedienbar sind.

Innerhalb einer vorgesehenen Triggerschaltung wird die Ansteuerimpulslänge in Abhängigkeit des Sägezahnanstiegs am Anschluss 4 festgelegt und der Steuerlogik übermittelt. In der Steuerlogik werden die Befehle der Triggerschaltung verarbeitet. Durch die Nulldurchgangs-Identifikation am Eingang 2 in der Regelschaltung RS wird die Steuerlogik in die Lage versetzt, den Steuerimpuls nur im Nullpunkt der frequenten Schwingung zu starten. Bei Unterspannung am Anschluss 5 und am Anschluss 9 blockiert die Steuerlogik den Ausgangsverstärker am Anschluss 8. Der Ausgangsverstärker am Anschluss 7, der für die Grundladung im Kondensator $C_2$ zuständig ist, wird davon nicht berührt.

Die Basisstromverstärkung für den Transistor $T_1$, also für den ersten Transistor gemäss Definition der Erfindung, wird durch zwei Verstärker gebildet, die wechselseitig auf den Kondensator $C_2$ arbeiten. Die Dachschräge des Basisansteuerungsstromes für den Transistor $T_1$ wird von der Kollektorstrom-Nachbildung am Anschluss 4 dem Verstärker am Anschluss 8 aufgeprägt. Der Steuerimpuls für den Transistor $T_1$ am Anschluss 8 wird stets auf das am Anschluss 7 vorliegende Potential aufgebaut. Der auf den Anschluss 7 arbeitende Verstärker sorgt dafür, dass jeder neue Schaltimpuls am Anschluss 8 den erforderlichen Grundpegel am Anschluss 7 vorfindet.

In Ergänzung der Ausführungen zu Figur 1 ist noch zu erwähnen, dass die Kathode der mit ihrer Anode an dem einen Ende der zweiten Sekundärwicklung II des Transformators Tr liegenden Diode $D_1$ über einen Widerstand $R_{11}$ an den Schutzeingang 5 der Regelschaltung RS gelegt ist, während bei der Schaltung gemäss Fig. 2 der Schutzeingang 5 von RS über einen Spannungsteiler $R_8$, $R_7$, der unmittelbar von dem die gleichgerichtete Netzwechselspannung liefernden Ausgang 3', 4' des Gleichrichters G versorgt ist, die für die Ausübung ihrer Funktion erforderliche Spannung erhält. Ersichtlich kann die erste Möglichkeit der Beaufschlagung des Schutzeingangs 5 auch bei der Schaltung gemäss Fig. 2 und die zweite Möglichkeit auch bei einer Schaltung gemäss Fig. 1 eingesetzt werden.

Die in Fig. 3 dargestellte und im einzelnen durch den Baustein TDA 4600 realisierte Regelschaltung RS, die sich besonders in Verbindung mit dem erfindungsgemässen Sperrschwinger-Schaltnetzteil eignet, hat wie bereits oben dargelegt wurde, 9 Anschlüsse 1–9, die – wie im wesentlichen bereits dargelegt, folgende Eigenschaften haben:

Anschluss 1 gibt eine Referenzspannung $U_{ref}$ ab, die als Konstantstromquelle eines Spannungsteilers $R_5$–$R_4$ dient, der für die in der Regelschaltung RS für die Funktionen Regelung, Überlasterkennung, Kurzschlusserkennung und «standby»-Leerlauf-Erkennung vorgesehenen Differenzverstärker die erforderlichen Gleichspannungen liefert. Der Teilerpunkt des besagten

Spannungsteilers $R_5$–$R_4$ ist an den Anschluss 3 der Regelschaltung RS gelegt. Der als Regeleingang vorgesehene Anschluss 3 von RS ist in bereits beschriebener Weise als Eingang für den Istwert der zu regelnden Spannung durch die dritte Sekundärwicklung III des Transformators Tr gesteuert. Mit diesem Eingang werden die Längen der Steuerimpulse für den Schalttransistor $T_1$ festgelegt.

Über den durch den Anschluss 2 der Regelschaltung RS gegebenen Eingang wird die Nullpunkt-Identifikation in der Regelschaltung für die Erkennung des Nullpunkts der jeweils an den Anschluss 2 gelegten Schwingungen beaufschlagt. Wenn diese Schwingung in den positiven Teil wechselt, dann wird in der Regelschaltung vorgesehenen Steuerlogik der den Schalttransistor $T_1$ über den Anschluss 8 steuernde Ansteuerimpuls freigegeben.

An Anschluss 4 liegt eine sägezahnförmig verlaufende Spannung, deren Steigung dem Kollektorstrom des Schalttransistors $T_1$ entspricht und die durch zwei Referenzspannungen minimal und maximal begrenzt wird. Die Sägezahnspannung dient einerseits als Komparator für die Impulslänge, während andererseits ihre Steigung dazu verwendet wird, um in der Basisstromverstärkung für den Schalttransistor $T_1$ über den Anschluss 8 eine dem Kollektorstrom proportionale Basisansteuerung dieses Schalttransistors $T_1$ zu erhalten.

Der Anschluss 7 der Regelschaltung RS legt, wie bereits angegeben, das Spannungspotential für die Ansteuerimpulse des Transistors $T_2$ fest. Über den Anschluss 8 erfolgt, wie bereits beschrieben, die Impulssteuerung der Basis des Schalttransistors $T_1$. Der Anschluss 9 ist als Stromversorgungseingang der Regelschaltung RS geschaltet. Bei Unterschreitung eines bestimmten Spannungspegels wird der Anschluss 8 gesperrt. Mit dem Überschreiten eines bestimmten positiven Wertes des Spannungspegels erfolgt die Aktivierung der Regelschaltung. Anschluss 5 gibt den Ausgang 8 nur dann frei, wenn ein bestimmtes Spannungspotential anliegt.

**Patentansprüche**

1. Sperrschwinger-Schaltnetzteil zur Versorgung eines elektrischen Geräts, bei dem die Primärwicklung (I) eines Transformators (Tr) in Serie mit der Emitter-Kollektorstrecke eines ersten Bipolartransistors ($T_1$) an die durch Gleichrichtung der über zwei externe Versorgungsanschlüsse zugeführten Netzwechselspannung erhaltene Gleichspannung gelegt und über eine Sekundärwicklung (III) des Transformators zur Stromversorgung des elektrischen Geräts vorgesehen ist, bei dem ausserdem die Basis des ersten Bipolartransistors ($T_1$) durch den Ausgang (7, 8) einer Regelschaltung (R) gesteuert ist, die ihrerseits durch einen von der gleichgerichteten Netzwechselspannung abgeleiteten Istwert und durch einen Sollwertgeber beaufschlagt ist und bei dem schliesslich eine Anlaufschaltung zur weiteren Steuerung der Basis des ersten Bipolartransistors vorgesehen ist, dadurch gekennzeichnet, dass eine in der Anlaufschaltung vorgesehene Diode ($D_4$) mit ihrer Anode unmittelbar an den einen (1′) der beiden durch die Netzwechselspannung zu beaufschlagenden Versorgungsanschlüsse (1′, 2′) gelegt ist, während ihre Kathode über einen Widerstand ($R_9$) an einen der Stromversorgung der Regelschaltung (RS) dienenden Eingang (9) derselben geschaltet ist, dass ausserdem derselbe Eingang (9) der Regelschaltung (RS) unmittelbar mit der Kathode einer zweiten Diode ($D_1$) und die Anode dieser zweiten Diode ($D_1$) mit dem einen Anschluss einer weiteren Sekundärwicklung (II) des Transformators (Tr) verbunden ist, während der andere Anschluss dieser Sekundärwicklung (II) am Emitter des ersten Bipolartransistors ($T_1$) liegt.

2. Schaltnetzteil nach Anspruch 1, dadurch gekennzeichnet, dass ein in der Anlaufschaltung vorgesehener zweiter Bipolartransistor ($T_2$) vom Leitungstyp des ersten Bipolartransistors ($T_1$) mit seiner Basis an die Kathode einer – insbesondere als Zenerdiode ausgebildeten – Halbleiterdiode ($D_3$) und die Anode dieser Diode ($D_3$) an den Emitter des ersten Transistors ($T_1$) gelegt ist, während sein Kollektor über den in der Anlaufschaltung in Verbindung mit deren Diode ($D_4$) vorgesehenen Widerstand ($R_9$) an die Kathode dieser Diode und sein Emitter an den Stromversorgungseingang (9) der Regelschaltung (RS) und an die Kathode der mit der zweiten Sekundärwicklung (II) des Transformators (Tr) verbundenen Diode ($D_1$) gelegt ist.

3. Schaltnetzteil nach Anspruch 2, dadurch gekennzeichnet, dass einerseits die Basis des zweiten Transistors an einem Widerstand ($R_{10}$) und über diesem an dem einen Pol eines Kondensators ($C_7$) liegt, während die Anode der in der Anlassschaltung vorgesehenen Diode ($D_4$) mit dem anderen Pol dieses Kondensators ($C_7$) verbunden ist.

4. Schaltnetzteil nach einem der Ansprüche 1 bis 3, dadurch gekennzeichnet, dass der der Stromversorgung der Regelschaltung (RS) dienende Anschluss (9) derselben über einen Kondensator ($C_3$) an den mit dem Emitter des ersten Bipolartransistors ($T_1$) unmittelbar verbundenen Ausgang des Netz-Gleichrichters (G) (3′) gelegt ist.

5. Schaltnetzteil nach einem der Ansprüche 1 bis 4, dadurch gekennzeichnet, dass eine dritte Sekundärwicklung (III) mit dem einen Ende an den Emitter des ersten Bipolartransistors ($T_1$) und ausserdem an den einen Pol eines weiteren Kondensators ($C_4$) gelegt ist, dass ausserdem der andere Pol des Kondensators ($C_4$) einerseits über einen Widerstand ($R_2$) mit dem anderen Ende der dritten Sekundärwicklung verbunden ist und andererseits an die Kathode einer weiteren Diode ($D_2$) gelegt ist, deren Anode über ein Potentiometer ($R_4$) an den Istwerteingang (3) der Regelschaltung (RS) und über einen weiteren Kondensator ($C_5$) an den Emitter des ersten Bipolartransistors ($T_1$) geschaltet ist.

6. Schaltnetzteil nach einem der Ansprüche 1 bis 5, dadurch gekennzeichnet, dass in der Regelschaltung (RS) Steuerimpulse für die Basis des ersten Bipolartransistors ($T_1$) erzeugt werden, die über den Stellausgang (8) der Regelschaltung (RS) und einen Kondensator ($C_2$) an die Basis des ersten Bipolartransistors ($T_1$) gelangen.

7. Schaltnetzteil nach einem der Ansprüche 1 bis 6, dadurch gekennzeichnet, dass die Emitter-Kollektorstrecke des ersten Transistors ($T_1$) durch einen Kondensator ($C_1$) überbrückt ist.

**Claims**

1. A blocking oscillator switching power supply unit for supplying an electrical device, wherein the primary winding (I) of a transformer (Tr) is connected in series with the emitter-collector path of a first bipolar transistor ($T_1$) to the direct voltage obtained as a result of the rectification of the alternating mains voltage which is supplied by means of two external supply terminals, and is provided for the current supply of the electric device through a secondary winding (III) of the transformer, wherein, moreover, the base of the first bipolar transistor ($T_1$) is controlled by the output (7, 8) of a control circuit (R) which, for its part, is controlled by an actual value derived from the rectified mains alternating voltage and by a theoretical value generator, and wherein, finally, a starting circuit for the further control of the base of the first bipolar transistor is provided, characterised in that a diode ($D_4$), which is provided in the starting circuit, has its anode directly connected to one (1′) of the two supply terminals (1′, 2′) which are supplied by the alternating mains voltage, whilst its cathode is connected to an input (9) of the control circuit (RS), which serves for the supply of current to the control circuit (RS), through a resistor ($R_9$); that, moreover, the same input (9) of the control circuit (RS) is directly connected to the cathode of a second diode ($D_1$) and the anode of the second diode ($D_1$) is connected to one terminal of a further secondary winding (II) of the transformer (Tr), whilst the other terminal of the secondary winding (II) is connected to the emitter of the first bipolar transistor ($T_1$).

2. A switching power supply unit as claimed in Claim 1, characterised in that the base of a second bipolar transistor ($T_2$) of the conductivity type of the first bipolar transistor ($T_1$) arranged in the starting circuit, is connected to the cathode of a semiconductor diode ($D_3$) (which, in particular, is in the form of a Zener diode) and the anode of the diode ($D_3$) is connected to the emitter of the first transistor ($T_1$), whilst its collector is connected to the cathode of the diode through the resistor ($R_9$) which is arranged in the starting circuit in combination with the diode ($D_4$) thereof, and its emitter is connected to the current supply input (9) of the control circuit (RS) and to the cathode of the diode ($D_1$) which is connected to the secondary winding (II) of the transformer (Tr).

3. A switching power supply unit as claimed in Claim 2, characterised in that, on the one hand, the base of the second transistor is connected to a resistor ($R_{10}$) and to one terminal of a capacitor ($C_7$) through said resistor, whilst the anode of the diode ($D_4$) arranged in the starting circuit, is connected to the other terminal of the capacitor ($C_7$).

4. A switching power supply unit as claimed in one of Claims 1 to 3, characterised in that the terminal (9) of the control circuit (RS), which serves for the current supply thereof, is connected through a capacitor ($C_3$) to the output of the power rectifier (G) (3′), which is directly connected to the emitter of the first bipolar transistor ($T_1$).

5. A switching power supply unit as claimed in one of Claims 1 to 4, characterised in that a third secondary winding (III) has its one end connected to the emitter of the first bipolar transistor ($T_1$) and is further connected to the one terminal of a further capacitor ($C_4$); that, moreover, the other terminal of the capacitor ($C_4$) is connected to the other end of the third secondary winding (III) through a resistor ($R_2$), on the one hand, and, on the other hand, is connected to the cathode of a further diode ($D_2$), the anode of which is connected to the actual value input (3) of the control circuit (RS) through a potentiometer ($R_4$) and to the emitter of the first bipolar transistor ($T_1$) through a further capacitor ($C_5$).

6. A switching power supply unit as claimed in one of Claims 1 to 5, characterised in that control pulses for the base of the first bipolar transistor ($T_1$) are produced in the control circuit (RS), which control pulses are fed to the base of the first bipolar transistor ($T_1$) through the setting output (8) of the control circuit (RS) and a capacitor ($C_2$).

7. A switching power supply unit as claimed in one of Claims 1 to 6, characterised in that the emitter-collector path of the first transistor ($T_1$) is shunted by a capacitor ($C_1$).

**Revendications**

1. Bloc d'alimentation sur secteur, à commutation et à oscillateur de blocage pour réaliser l'alimentation d'un appareil électrique et dans lequel l'enroulement primaire (I) d'un transformateur (Tr) branché avec la voie émetteur-collecteur d'un premier transistor bipolaire ($T_1$) est placé à la tension continue fournie par redressement de la tension alternative du réseau arrivant par l'intermédiaire de deux bornes extérieures d'alimentation, et dans lequel un enroulement secondaire (III) du transformateur est prévu pour l'alimentation en courant de l'appareil électrique, et dans lequel en outre la base du premier transistor bipolaire ($T_1$) est commandée par la sortie (7, 8) d'un circuit de réglage (R) qui pour sa part est chargé par une valeur réelle dérivée de la tension alternative du réseau redressée et par un générateur de valeurs de consigne et dans lequel enfin il est prévu un circuit de démarrage pour réaliser la commande ultérieure de la base du premier transistor bipolaire, caractérisé par le fait qu'une diode ($D_4$) prévue dans le circuit de démarrage est raccordée par son anode directement à l'une (1') des deux bornes d'alimentation (1', 2') devant être chargées par la tension alternative du secteur tandis que la cathode est raccordée par l'intermédiaire d'une résistance ($R_9$) à une entrée (9) servant à réaliser l'alimentation en courant du circuit de réglage (RS), qu'en outre cette même entrée (9) du circuit de réglage (RS) est reliée directement à la cathode d'une seconde diode ($D_1$) et que l'anode de cette seconde diode ($D_1$) est reliée à une borne d'un autre enroulement secondaire (II) du transformateur (Tr), tandis que l'autre borne de cet enroulement secondaire (II) est raccordée à l'émetteur du premier transistor bipolaire ($T_1$).

2. Bloc d'alimentation sur secteur, à commutation suivant la revendication 1, caractérisé par le fait qu'un second transistor bipolaire ($T_2$), qui est prévu dans le circuit de démarrage et qui possède le type de conductivité du premier transistor bipolaire ($T_1$) est relié par sa base à la cathode d'une diode semiconductrice ($D_3$) - réalisée notamment sous la forme d'une diode Zener - et que l'anode de cette diode ($D_3$) est raccordée à l'émetteur du premier transistor ($T_1$), tandis que le collecteur du second transistor est raccordé par l'intermédiaire de la résistance ($R_9$), prévue dans le circuit de démarrage et reliée à la diode ($D_4$) de ce circuit, à la cathode de cette diode et que son émetteur est raccordé à l'entrée (9) d'alimentation en courant du circuit de réglage (RS) et à la cathode de la diode ($D_1$) reliée au second enroulement secondaire (II) du transformateur (Tr).

3. Bloc d'alimentation sur secteur, à commutation suivant la revendication 2, caractérisé par le fait que d'une part la base du second transistor est raccordée à une résistance ($R_{10}$) et, par l'intermédiaire de cette dernière, à un pôle d'un condensateur ($C_7$), tandis que l'anode de la diode ($D_4$) prévue dans le circuit de démarrage, est reliée à l'autre pôle de ce condensateur ($C_7$).

4. Bloc d'alimentation sur secteur, à commutation suivant l'une des revendications 1 à 3, caractérisé par le fait que la borne (9) du circuit de réglage (RS), qui sert à réaliser l'alimentation en courant de ce circuit, est raccordée par l'intermédiaire d'un condensateur ($C_3$) à la sortie, directement reliée à l'émetteur du premier transistor bipolaire ($T_1$), du redresseur réseau (G 3').

5. Bloc d'alimentation sur secteur, à commutation suivant l'une des revendications 1 à 4, caractérisé par le fait qu'un troisième enroulement secondaire (III) est raccordé, par l'une de ses extrémités, à l'émetteur du premier transistor bipolaire ($T_1$) et en outre à un pôle d'un autre condensateur ($C_4$), qu'en outre l'autre pôle du condensateur ($C_4$) est relié d'une part par l'intermédiaire d'une résistance ($R_2$) à l'autre extrémité du troisième enroulement secondaire et est relié d'autre part à la cathode d'une autre diode ($D_2$), dont l'anode est raccordée par l'intermédiaire d'un potentiomètre ($R_4$) à l'entrée des valeurs réelles (3) des circuits de réglage (RS) et par l'intermédiaire d'un autre condensateur ($C_5$) à l'émetteur du premier transistor bipolaire ($T_1$).

6. Bloc d'alimentation sur secteur, à commutation suivant l'une des revendications 1 à 5, caractérisé par le fait que des impulsions de commande, qui sont prévues pour la base du premier transistor bipolaire ($T_1$) et qui parviennent à cette base par l'intermédiaire de la sortie de réglage (8) du circuit de réglage (RS) et d'un condensateur ($C_2$), sont produites dans le circuit de réglage (RS).

7. Bloc d'alimentation sur secteur, à commutation suivant l'une des revendications 1 à 6, caractérisé par le fait que la voie émetteur-collecteur du premier transistor ($T_1$) est shuntée par un condensateur ($C_1$).

FIG 1

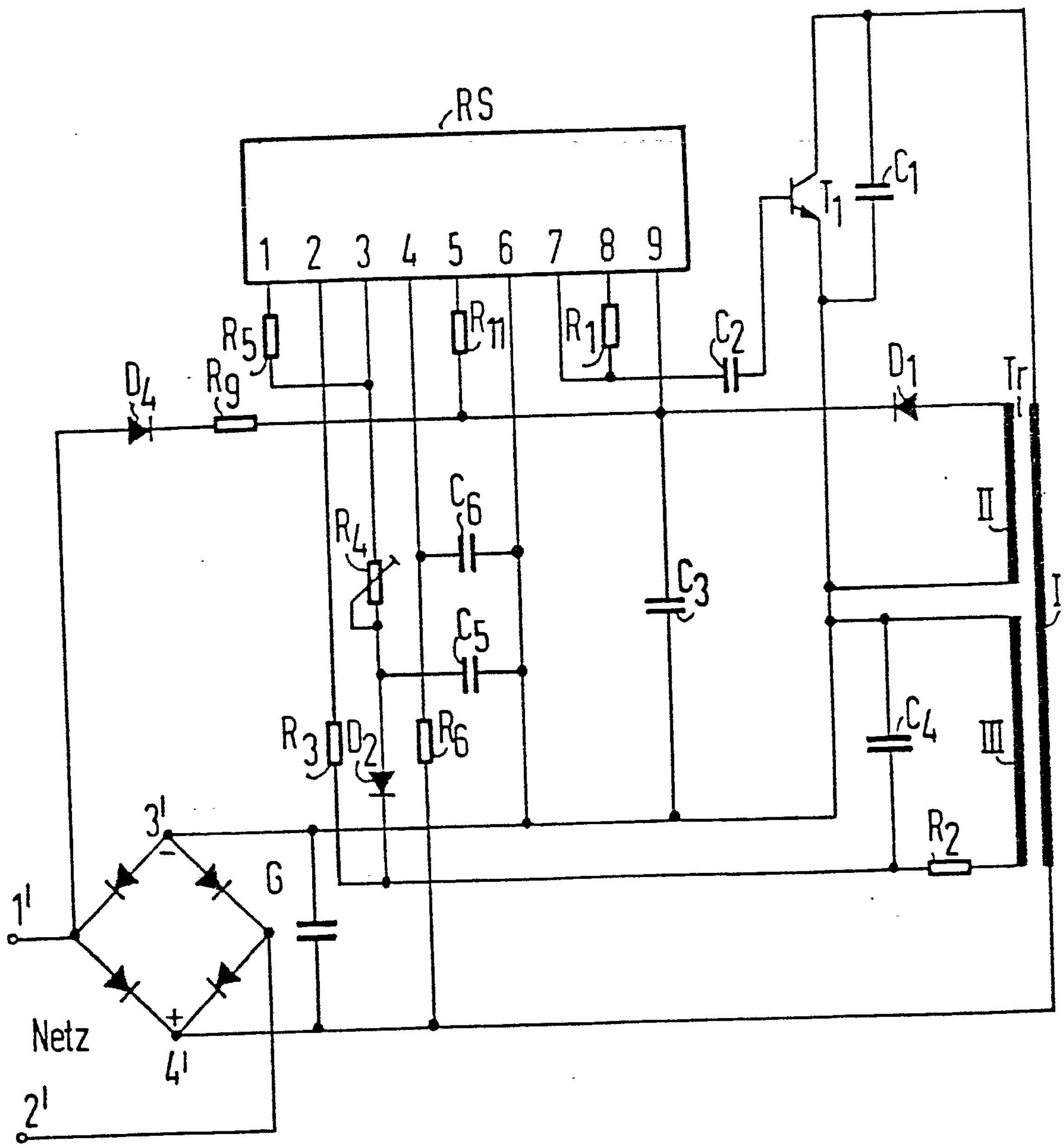
RS
1
2
3
4
5
6
7
8
9
T1
C1
R5
R11
R1
C2
D4
R9
D1
Tr
II
C6
R4
C3
I
C5
C4
R3
D2
R6
III
3'
R2
G
1'
Netz
4'
2'

FIG 2

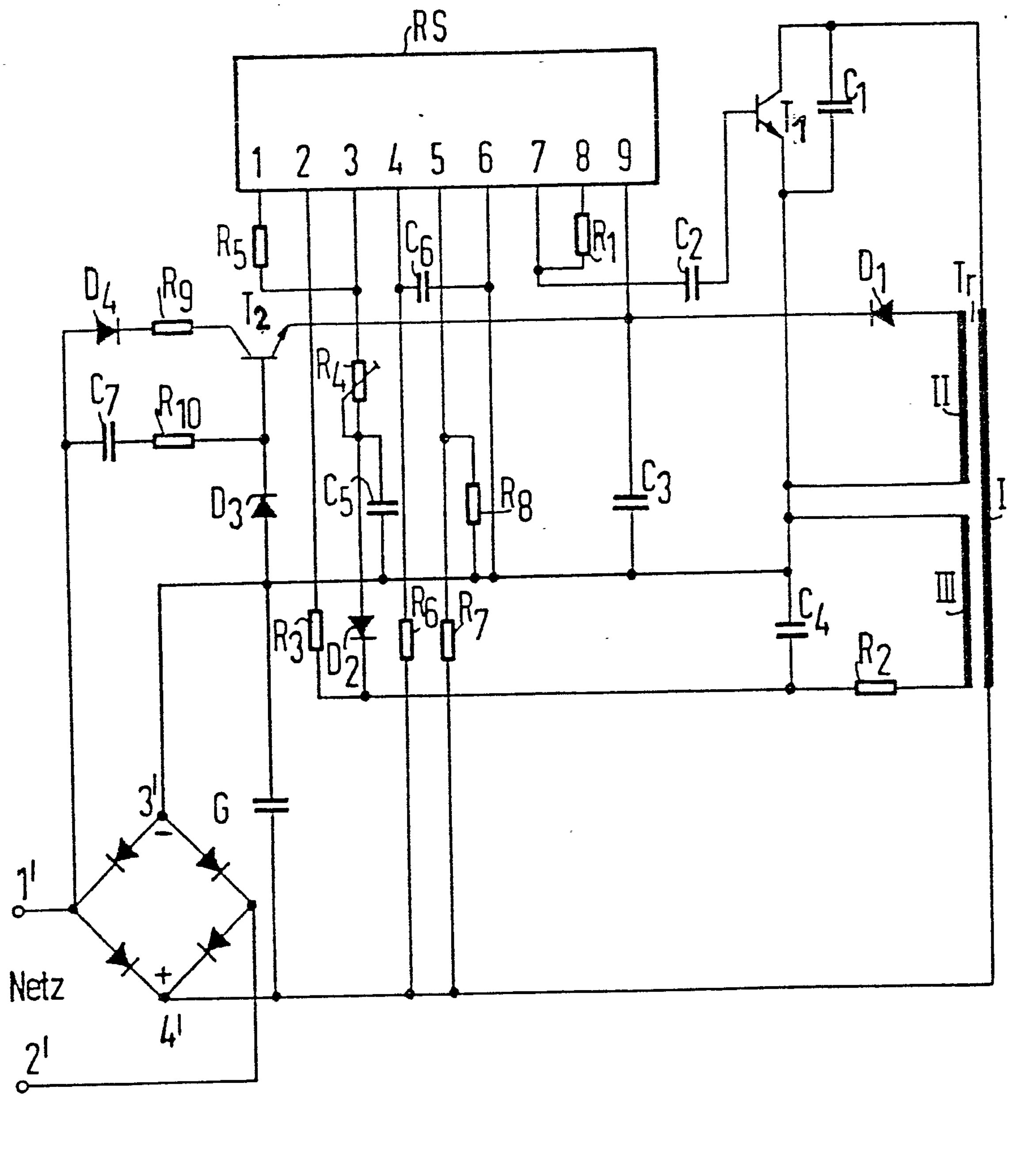
RS
1 2 3 4 5 6 7 8 9
R5
R1
C6
C2
C1
T1
D4
R9
T2
D1
Tr
R4
II
C7
R10
I
C3
D3
C5
R8
R3
D2
R6
R7
C4
III
R2
3'
G
1'
Netz
4'
2'

FIG 3

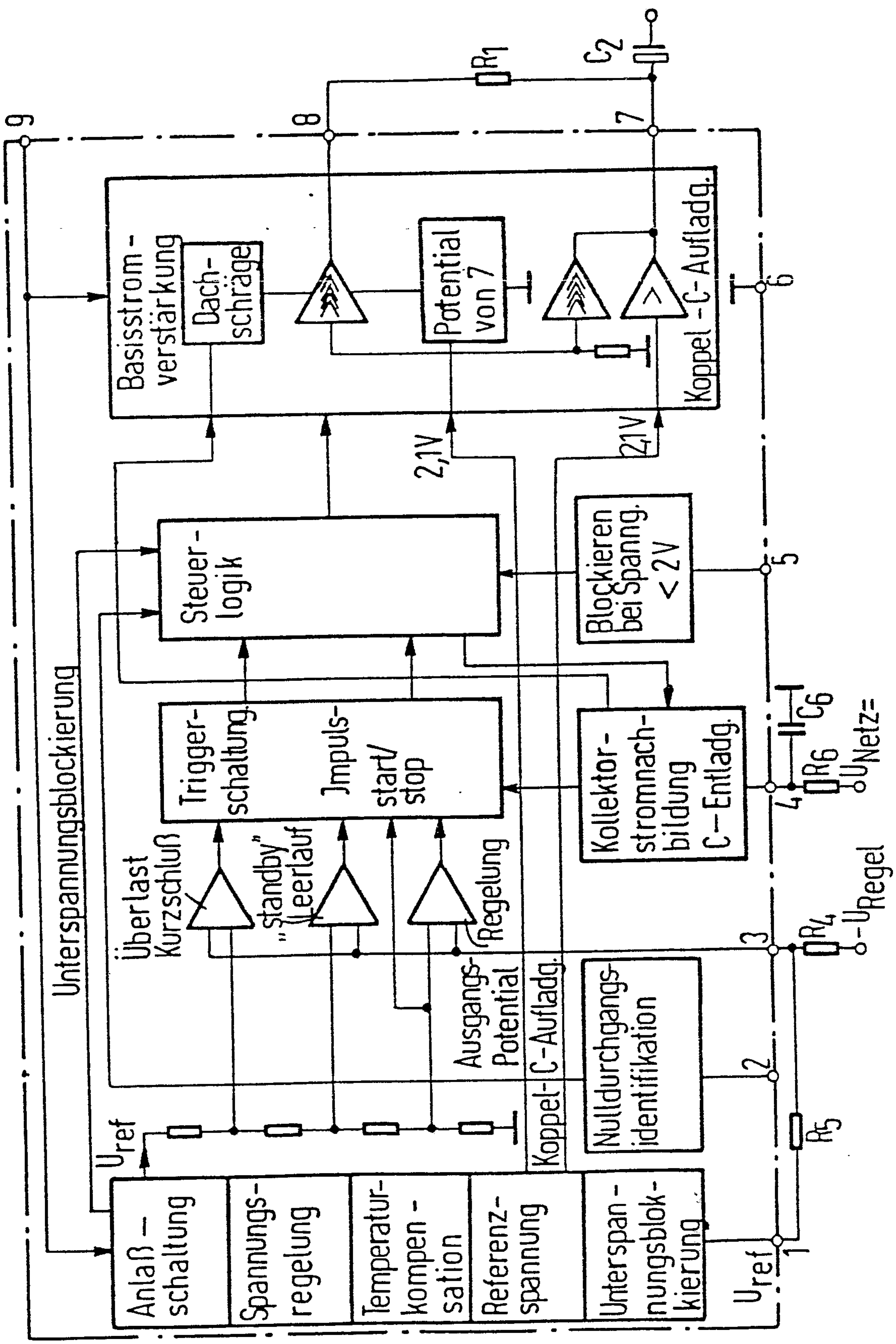
Basisstrom-verstärkung
Dach-schräge
Potential von 7
Koppel-C-Aufladg.
Steuer-logik
Blockieren bei Spanng. < 2V
2,1V
2,1V
Trigger-schaltung
Jmpuls-start/stop
Kollektor-stromnach-bildung C-Entladg.
Überlast Kurzschluß
"standby" Leerlauf
Regelung
Ausgangs-Potential
Koppel-C-Aufladg.
Nulldurchgangs-identifikation
Unterspannungsblockierung
$U_{ref}$
Anlaß-schaltung
Spannungs-regelung
Temperatur-kompen-sation
Referenz-spannung
Unterspan-nungsblok-kierung
$U_{ref}$
$R_1$
$C_2$
$R_4$
$R_5$
$R_6$
$C_6$
$-U_{Regel}$
$U_{Netz=}$
1
2
3
4
5
6
7
8
9